# EUROPEAN PATENT APPLICATION

(11) **EP 2 946 819 A1**
(43) Date of publication of application: **25.11.2015**
(21) Application number: 15168124.4
(22) Date of filing: 19.05.2015
(51) Int. Cl.: A63F 3/00

(54) **EPISODIC BOARD GAME**

(30) Priority: 19.05.2014 US 201462000230 P; 14.05.2015 US 201514712044
(71) Applicant: National Entertainment Collectibles Association, Inc., Hillside, NJ 07205 (US)
(72) Inventor: Weinshanker, Joel, Las Vegas, NV 89158 (US)
(74) Representative: Hoffmann Eitle

(57) **Abstract**

The present disclosure relates to an episodic board game. More specifically, the present disclosure relates to an episodic board game, comprising a first game kit including a first set of rules and a first set of game components, and a plurality of subsequent game kits released incrementally at predetermined time intervals for integration with at least the first game kit or a previously integrated subsequent game kit, each of the plurality of subsequent game kits including at least subsequent set of rules or subsequent set of game components.

## Description

### RELATED APPLICATIONS

This application claims the benefit of priority to U.S. Provisional Application Serial No. 62/000,230, filed May 19, 2014, the entire disclosure of which is expressly incorporated herein by reference.

### FIELD OF THE DISCLOSURE

The present disclosure relates generally to an episodic board game, and more specifically, to a board game that is periodically updated or changed with new rules and/or game components. Each integration can provide an "episode" of a game.

### RELATED ART

Board games are a popular pastime, bringing together groups of people for amusement as well as healthy social interaction. Traditionally, board games are static and unchanging. The same game can be played for years, and the rules, pieces, and game components stay the same.

### SUMMARY

The present disclosure relates to an episodic board game. The episodic board game includes a foundational set of rules and game components. A plurality of episodes follow on sets of rules and/or game components that are subsequently provided. Players can play the game using the foundational set of game components according to the foundational set of rules. Thereafter, a first episodic set of game components and/or game rules are provided for use with the foundational set of game components to create a new first episode of the game. Players can then play the first episode of the game using the integrated set of game components and/or first episodic set of rules. Subsequent episodes of the game are subsequently provided, which integrate with the foundational game and/or previous episodes. Players can continue to play further episodes of the game by integrating additional episodic sets of game components and/or episodic sets of rules. The episodic sets of rules and game components can be provided to players on a per-episode basis over an extended period of time. A distribution system can be used to facilitate the distribution of the episodic rules and/or game components to the players.

### BRIEF DESCRIPTION OF THE DRAWINGS

The foregoing features will be apparent from the following Detailed Description, taken in connection with the accompanying drawings, in which:
**FIG. 1** is a schematic representation of a foundational game for an episodic board game;
**FIGS. 2A & 2B** are schematic representations of episodic game sets for an episodic board game;
**FIGS. 3-5** are flowcharts showing playing steps for implementing an episodic board game;
**FIG 6** is a diagram showing a general overview of an episodic board game distribution system communicating through a network with user computer systems, a supply computer system, and a shipping computer system;
**FIGS. 7-10** are flowcharts showing processing steps for distributing an episodic board game;
**FIGS. 11-12** are flowcharts showing processing steps for producing an episodic board game; and
**FIG. 13** is a diagram showing hardware and software components of the episodic board game distribution system.

### DETAILED DESCRIPTION

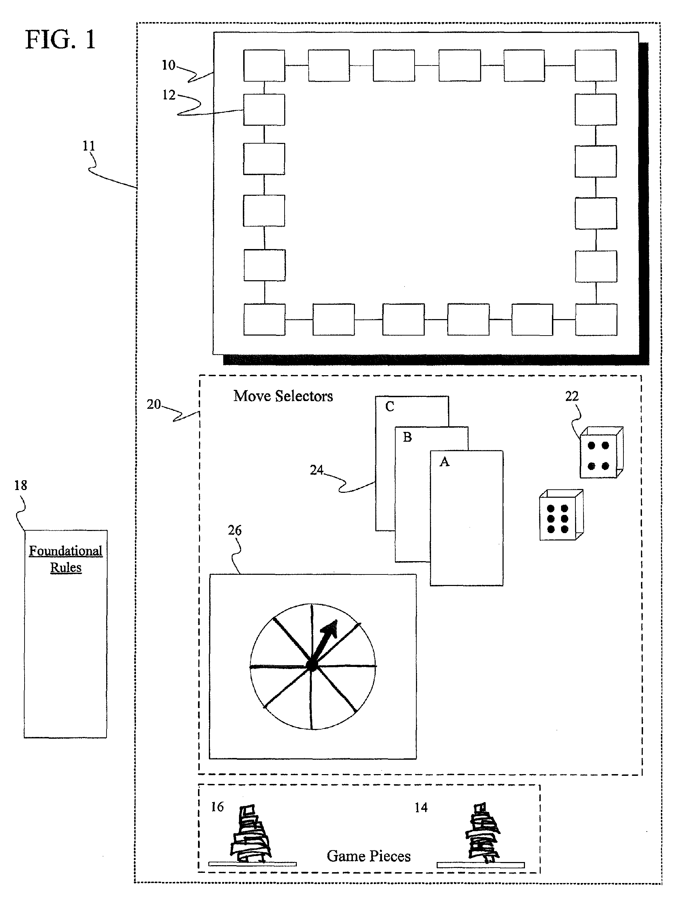

The present disclosure relates to an episodic board game, and also to a method and system for its distribution, as discussed in detail below in connection with **FIGS. 1-13****.**

**FIG. 1** is a schematic representation of a foundational game. The foundational game can include a foundational set of game components **11** and a foundational set of rules **18.** The foundational set of game components **11** could comprise a game playing surface **10** such as a board that could include a design **12** or other information that represents a game course. While the game playing surface **10** shown in **FIG. 1** is a game board, the game playing surface can be any type of surface while remaining within the scope of the present disclosure. For example, the game playing surface **10** could be a three-dimensional surface. Also, those in the art will appreciate that the design **12** shown in **FIG. 1** is exemplary and that the design **12** could include any type and number of shapes, colors, and/or forms.

The foundational set of game components **11** could include game pieces **14, 16** for interacting with the design **12** on the game playing surface **10.** While **FIG. 1** shows two game pieces **14, 16,** it should be well understood that the foundational set of game components **11** could include any number of game pieces **14, 16** while remaining within the scope of the present disclosure. One or more move selectors **20** could be provided for determining if, how, and to what extent the game pieces **14, 16** move in relation to the design **12.** While the game could include any number and type of move selectors **20,** move selectors such as dice **22,** a spinner **26,** and a set of cards **24** shown in **FIG. 1** are examples of such move selectors. A foundational set of rules **18** is shown for establishing rules of a foundational game. The foundational set of rules **18** can be provided to the players in any manner (e.g., via a physical medium (e.g., a card) as shown in **FIG. 1****,** and/or by transmitting an electronic message to a player (via electronic mail, a website, text message, etc.)). The players could use the foundational set of rules **18** and play a foundational game, moving the game pieces **14, 16** throughout the design **12** on the game playing surface **10** according to one or more move selectors **20.**

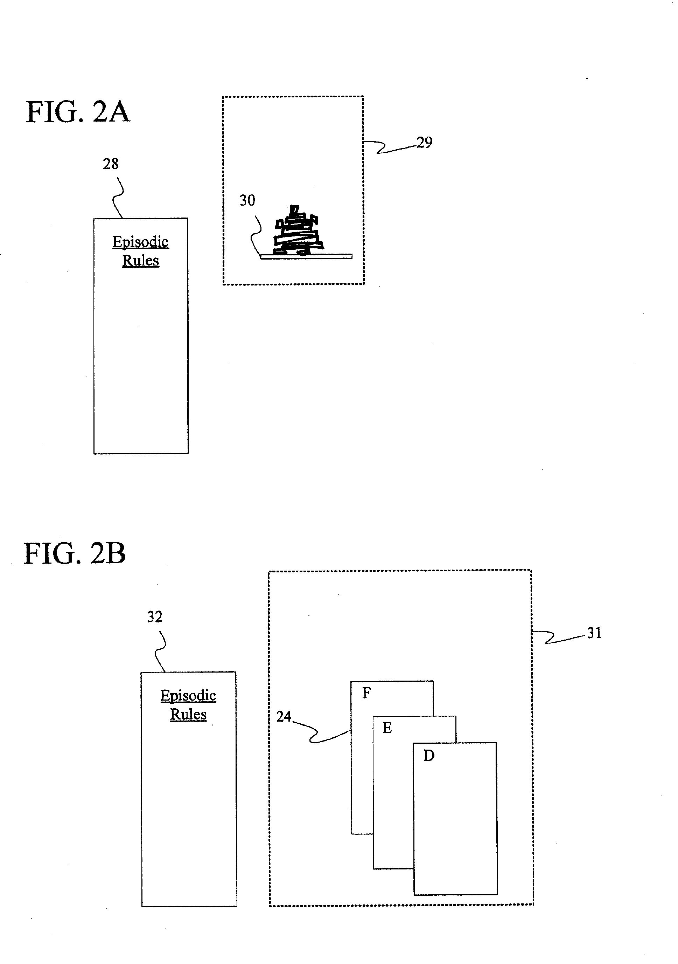

Now turning to **FIG. 2A****,** after playing the foundational game with the foundational game kit, a first episode of the game could be provided with a first episodic game kit. The first episodic game kit could comprise an episodic set of rules **28** and an episodic set of game components **29.** The episodic set of game components **29** could include any type and number of game components, for example, an overlay for the playing surface **10** or a new playing surface, one or more game pieces, a move selector, etc. It should be noted that the episodic game could utilize one or more of the components of the foundational game, and subsequent episodes could utilize one or more of the components from previous episodes and/or from the foundational game. In the embodiment shown in **FIG. 2A****,** the episodic set of game components **29** includes one or more additional game pieces **30.** Additionally or alternatively, the episodic set of game components **29** could include one or more accessories (e.g., a weapon, a costume) (not shown) for one or more game pieces (e.g., **14, 16, 30**). Also, while **FIG. 2A** shows an episodic set of game components **29** that comprises one additional game piece **30,** it should be understood that the episodic set **29** need not include an additional game piece **30,** or may include any number of additional game pieces **30,** while remaining within the scope of the present disclosure.

The episodic game kit could include an episodic set of rules **28.** The episodic set of rules **28** could indicate how to integrate the episodic set of game components **29** with the foundational set of game components **11** to create an integrated set of game components. In some cases, the episodic set of rules **28** could indicate that one or more foundational game components **11** are not to be used during the episodic game episode. For example, one or more episodic game components **29** could be used in lieu of one or more foundational game components **11.** In some cases, the episodic set of rules **28** could indicate that the episodic game components **29** are used in addition to the foundational set of game components **11.** In some cases, the episodic set of rules **28** could indicate that players are given an option as to which game components to use out of the foundational set **11** and episodic set of game components **29.** For example, in cases where the episodic set of game components **29** includes one or more game pieces **30,** the episodic set of rules **28** could state whether such one or more game pieces **30** must be used by a player in playing the game episode, and if so, state means for determining which player is to use which game piece **30.** The episodic set of rules **28** could also indicate how to play the episode of the game using the integrated set of game components. For example, in cases where the episodic set of game components include one or more game pieces **30,** the episodic set of rules **28** could explain how to play the game episode using the one or more game pieces **30,** and any "powers" or advantages attributable to the one or more game pieces **30.**

The episodic set of rules **28** could indicate how they are to relate to the foundational set of rules **18.** For example, in some cases, the episodic set of rules **28** could override part or all of the foundational set of rules **18.** In some cases, rather than overriding, the episodic set of rules **28** could modify, supplement and/or add to the foundational set of rules **18.** The episodic set of rules **28** could differ from the foundational set of rules **18** to any degree.

In some cases, the episodic set of rules **28** could simply explain how to integrate the episodic set of game components **29** into the foundational set of game components **11,** and direct the players to play the first episode of the game similarly to how they played the foundational game. In some cases, the episodic set of rules **28** could bring about a different version of the game relative to the foundational game. In some cases, the episodic set of rules **28** could make substantial changes to the foundational set of rules **18** and thereby lay out a different game. The players could follow the episodic set of rules **28** and play the game, for example, by moving the game pieces **14, 16** throughout the design **12** on the game playing surface **10** according to one or more of the move selectors **20.**

Now turning to **FIG. 2B****,** after playing the first episode of the game with the first episodic game kit (e.g., shown in **FIG. 2A**), a second episode of the game could be provided to the players to play a second episode of the game with a second episodic game kit (e.g., shown in **FIG. 2B**). The second episodic game kit could comprise another episodic set of rules **32** and a second episodic set of game components **31.** The second episodic set of game components **31** could include any number and/or type of game components, for example, an overlay for the playing surface **10,** a game piece, a random move selector, etc. In the embodiment shown in **FIG. 2B****,** the second episodic set **31** comprises a move selector **20** including cards **24D-F.** Additionally or alternatively, the second episodic set of game components **31** could include one or more game pieces and/or accessories (e.g., a weapon, a costume) (not shown) for game pieces. While **FIG. 2B** shows a second episodic set of game components **31** comprising an additional move selector **20,** namely, cards **24,** it should be understood that the episodic set **31** need not include an additional move selector **20,** or may include any number of additional move selectors **20,** while remaining within the scope of the present disclosure.

In cases where cards **24A-C** were previously provided to the players in the foundational set of game components **11** and/or in a prior episodic set of game components (e.g., **29**) the episodic set of rules **32** could indicate how the additional cards **24D-F** are to be integrated with the previously provided cards **24A-C.** In some cases, the additional cards **24D-F** could be used instead of the previously presented cards **24A-C.** In some cases, the additional cards **24D-F** could replace some, but not all, of the cards **24A-C** previously provided. In some cases, the additional cards **24D-F** could be used together with all of the previously provided cards **24A-C.** In some cases, the players could be given an option as to which cards, out of the previously provided cards **24A-C** and the newly provided cards **24D-F,** to use for the game episode.

The second episodic set of rules **32** could indicate how to integrate the second episodic set of game components **31** with the foundational set **11** and the first episodic set of game components **29** to create another integrated set of game components. In some cases, all or some of the foundational set of game components **11,** but none of the previously provided episodic set **29** of game components, could be included in the a second integrated set of game components. For example, the second episode of the game could be played with the new set of episodic game components **31** (e.g., with cards **24D-F**) and with the entire foundational set of game components **11,** but without any of the previously provided episodic set of game components **19** (e.g. without the one or more game pieces **30**). In some cases, all or some of the foundational set of game components **11** and all or some of the previously provided episodic set of game components **29** could be used in the second integrated set of game components. For example, the second episode of the game could be played with the second set of game components **31** (e.g., cards **24D-F**) together with the foundational set of game components **11,** as well as with the previously provided episodic set of game components **29.** In some cases, all or some of the previously provided episodic set of game components **29,** but none of the foundational set of game components **11,** could be used in the second integrated set of game components. For example, the second episode could be played with the second episodic set of game components **32** (e.g., cards **24D-F**) together with the previously provided episodic set of game components **29** (e.g., with game piece **30**) but not with any components from the foundational set of game components **11.**

Also, the second episodic set of rules **32** could indicate how to play the second episode of the game using the second integrated set of game components. The second episodic set of rules **32** could differ from the foundational set of rules **18** and previously provided episodic set of rules **28** to any degree. In some cases, the second episodic set of rules **32** could simply explain how to integrate the second episodic set of game components **31** with the previously provided sets of game components **11, 29,** and direct the players to play the second episode of the game similarly to how they played the foundational game and/or the first episode of the game. In some cases, the second episodic set of rules **32** could bring about a different version of the game relative to any of the previous episodes of the game. In some cases, the second episodic set of rules **32** could make substantial changes to the foundational set of rules **18** and to the previous set of rules **28,** and thereby lay out a different game. The players could follow the a second episodic set of rules **32** and play the game by moving the game pieces (e.g., **14, 16, 30**) throughout the design **12** on the game playing surface 10 according to one or more move selectors **20** (e.g., according to cards **24A-F**).

The players could be provided with any number of other additional episodic sets of rules and game components for playing any number of additional episodes of the game. Similar to that explained above, the additional sets of rules could override, modify, and/or supplement any or all of the previously provided sets of rules (e.g., **18, 28, 32**). Also, the additional sets of game components could be integrated with (e.g., substitute, supplement, etc.) any or all of the previously provided game components (e.g., **11, 29, 31**). In some cases, an episode could be a different version of one or more previously played episodes. In some cases, an episode could be a different game than one or more of the previously played episodes. Thus, the various sets of rules and game components can relate to one another according to any degree of interdependence. Each episode of the game could build upon any number of the previously played episodes. Thus, as players integrate various sets of rules and game components, multiple episodes of the game are created over time, thereby allowing the players to play different versions of the game or different games.

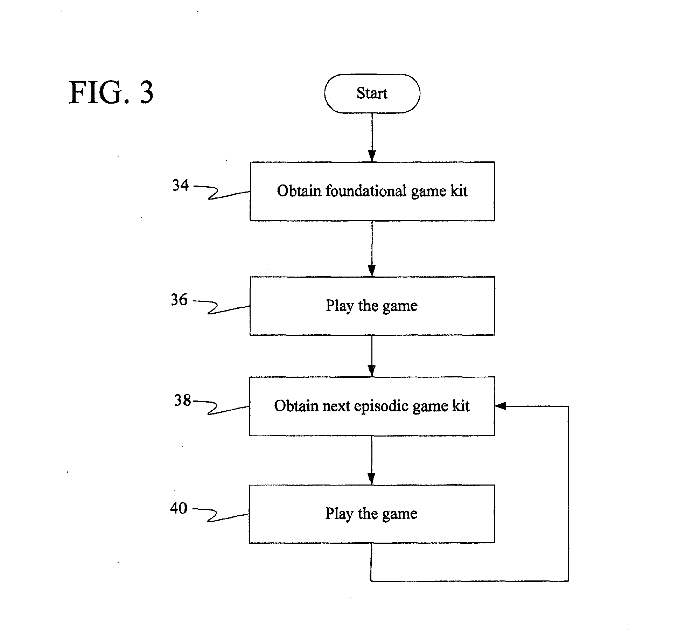

**FIG. 3** is a flow-chart showing playing steps for implementing an episodic board game. Step **34** comprises obtaining a foundational game kit, including a foundational set of rules **18** and a foundational set of game components **11.** In step **36,** players play a foundational game using the foundational set of game components **11** and according to the foundational set of rules **18.** Step **38** comprises obtaining an episodic game kit for integrating with the foundational game kit. The episodic game kit includes an episodic set of rules **28** and an episodic set of game components **29.** Upon integrating the episodic set of game components **29** with the foundational set of game components **11,** the players, in step **40,** play a first game episode using the integrated set and according to the episodic set of rules **28.** Depending on the episodic set of rules **28** in comparison with the foundational set of rules **18,** the foundational game and the first game episode could be different versions of a game, or the foundational game and first game episodes could be different games.

After playing the first episode with the integrated set of game components, the players could obtain another game kit for integrating with the previous game kits, and thereby play a second episode of the game. There is no limit contemplated as to how many times the steps of providing an additional game kit and playing an additional episode of the game can be repeated.

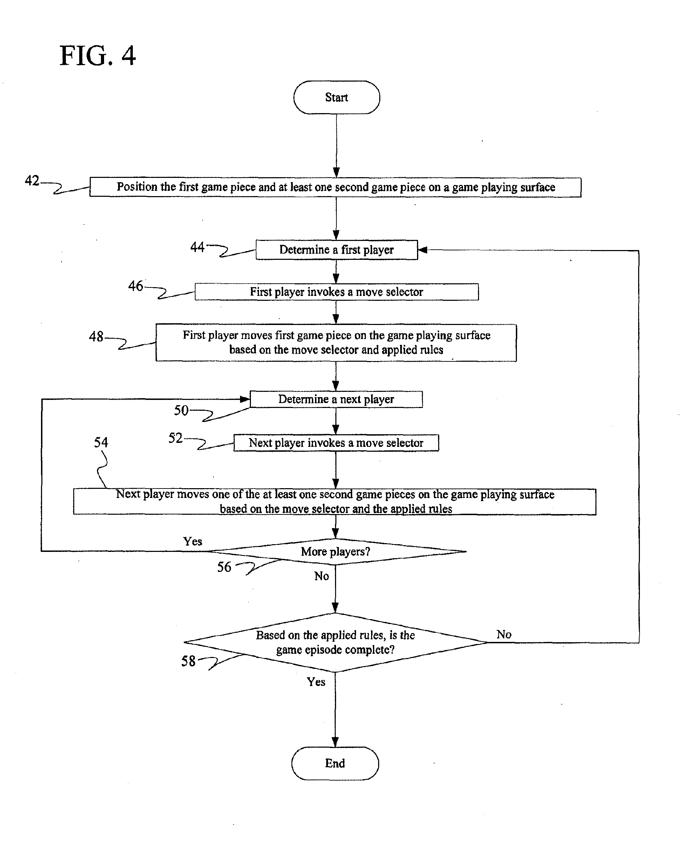

**FIG. 4** **is** another flow chart showing playing steps for playing an episodic board game. For example, steps **36** and **40** of **FIG. 3** can be implemented through the method shown in **FIG. 4****.** In step **42,** the players position the first game piece **14** and at least one second game piece **16** on a game playing surface **10.** In step **44,** the players determine a first player. A first player could be selected based on a set of rules (e.g., a foundational set of rules **18**), or a first player could be agreed upon by the players. In step **46,** the first player uses a move selector **20.** In step **48,** the first player positions the first game piece **14** on the game player surface **10** based on the move selector **20** and the applied set of rules. In step **50,** a next player is determined. In step **52,** the next player invokes a random move selector **20.** In step **54,** the next player positions the second game piece **16** on the game playing surface **10** based on the random move selector. Step **56** comprises determining whether there are any more players in the game round. If there are more players in the round, then the players return to step **50,** wherein a next player is determined. If there are not more players in the game round, then the method moves to step **58.** Step **58** comprises determining whether the game episode is complete. If the game episode is not complete (e.g., if there remains another game round to be played), then the method loops back to step **44,** and the players determine a first player in a next game round. If the game episode is complete, (e.g., if no more game rounds remain to be played for the game episode), then the game episode is complete. Of course, the game could be played again by the same or different players.

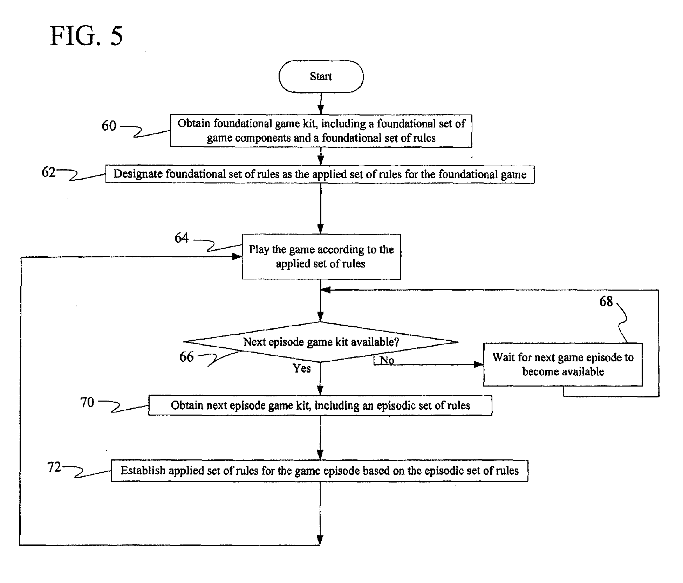

**FIG. 5** is a flow chart that shows steps for implementing an episodic board game. Step **60** comprises obtaining a foundational game kit, including a foundational set of game components **11** and a foundational set of rules **18.** In step **62,** the foundational set of rules are designated as the applied rules for a foundational game. In step **64,** the players play the foundational game according to the applied rules (e.g., the foundational set of rules **18**). In step **66,** the players determine whether the next episode game kit is available. If the next episode game kit is not available, then in step **68** the players wait. While waiting for the next episodic kit to become available, the players (or different players) could continue to play the current episode and/or a prior episode. When the next episode game kit is available, the next episode game kit is obtained by the players in step **70.** The next episode game kit includes an episodic set of rules **28** and could also include an episodic set of game components **29.** In step **72,** a new set of applied rules are established based on the episodic set of rules **28.** As described above with reference to **FIGS. 2A** and **2B****,** the episodic set of rules **28** could indicate how they are to relate to the foundational set of rules **18.** For example, in some cases, the applied rules are established based on the episodic set of rules **28** overriding part or all of the foundational set of rules **18.** In some cases, the applied rules are established based on the episodic set of rules **28** modifying, supplementing and/or adding to the foundational set of rules **18.** In step **64,** upon establishing the applied set of rules, the players use the applied set of rules to play a next episode of the game.

The episodic game kits can be provided to the players incrementally (e.g., weekly, monthly, yearly). Thus, the episodes will likely be played by the players over the course of an extended period of time, rather than all at once. As such, the incremental distribution of the episodic game kits improves the board game's suspense and entertainment value to the players.

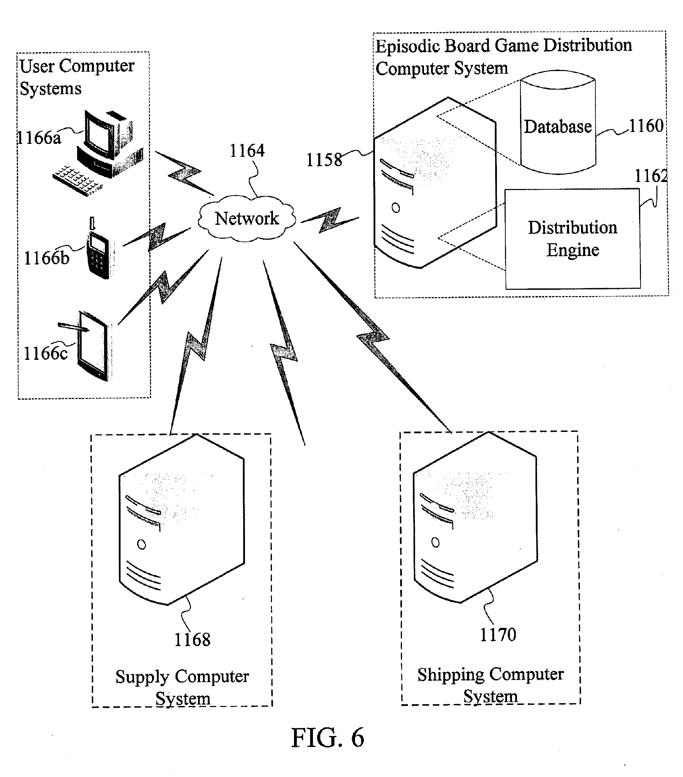

The incremental distribution of the episodic board game kits can be performed using an episodic board game distribution system **1158,** a general overview of which is shown in **FIG. 6****.** The episodic board game distribution system **1158** includes a database **1160** and a distribution engine **1162.** Engine **1162** includes, but is not limited to, a processor, a server, software, programming code, a computer, and any combination thereof. While **FIG. 6** shows a database **1160** stored locally in the computer system's **1158** memory, the database **1160** may comprise any type of database, such as a web-based (e.g., cloud-based) database, a locally stored database, or any combination thereof. In the episodic board game distribution computer system **1158** shown in **FIG. 6****,** the database **1160** could include multiple databases and/or the distribution engine **1162** could include multiple engines. The distribution engine **1162** is configured to receive, process, and transmit information through the network **1164** to control the distribution of episodic game kits to purchasers. The network **1164** could be any type of network, such as a local area network, a wireless network (e.g., Internet, wireless public and/or private networks, cellular system) or any combination thereof. The network **1164** could comprise a single network or any number of networks.

The distribution computer system **1158** can communicate, through the network **1164,** with user computer systems **1166a-1166c,** a supply computer system **1168,** and a shipping computer system **1170.** The user computer systems **1166a-1166c** may comprise any type and any number of user devices capable of communicating with the engine **1162,** such as personal computers, laptops, mobile phones, tablets, etc. While **FIG. 6** shows one supply computer system **1168** and one shipping computer system **1170,** it should be well understood that any number of supply computer systems **1168** and any number of shipping computer systems **1170** could be provided while remaining within the scope of the present disclosure.

The distribution engine **1162** could have a registration functionality for registering a purchaser. During registration, the purchaser could transmit shipping and payment information to the distribution engine **1162** for storing in the database **1160.** A purchaser could also send other information relating to the purchaser's demographic (e.g., skill level, age), interests, etc. In some cases, the purchaser could be given an option as to the frequency of receiving episodic game kits (e.g., every 2 weeks, every month, every 6 months, etc.). Thus, the purchaser could implement a user computer system **1166a** to send information indicating a preferred frequency to the distribution engine **1162.** In other cases, such frequency is established by the distribution system **1158** without receiving input from the purchaser.

The episodic board game distribution computer system **1158** can store in the database **1160** information relating to the purchaser's payment method, shipping method, and frequency of receiving game kits. The distribution computer system **1158** can then use the stored information to coordinate sales and deliveries of game kits to the purchaser. For example, after or during the registration process, the purchaser could send an episodic game order request to the distribution computer system **1158.** The distribution computer system **1158** could then process the purchaser's payment information to charge the user for a foundational game kit. In some cases, the system **1158** could charge the purchaser for the foundational game kit only. In other cases, the system **1158** could charge the purchaser for the foundational game kit as well as for one or more episodic game kits. The distribution system **1158** could then send (e.g., via network **1164**) to the shipping computer system **1170** a shipment request message requesting a foundational game kit to be sent to the purchaser. In some cases, the distribution computer system **1158** sends the shipment request message to the shipping computer system **1170** immediately or almost immediately upon receiving the episodic game order request from the purchaser. In some cases, the distribution computer system **1158** waits between receiving the episodic game order request and sending the shipment request message. For example, the distribution computer system could coordinate shipment request messages among several purchasers, to thereby facilitate the distribution of the game kits.

After the distribution computer system **1158** sends a shipping request message to the shipping computer system **1170** to ship a foundational game set, the distribution engine **1162** waits a predetermined amount of time based on the frequency of sending the game kits to the purchaser.

In some cases, the purchasers could be scheduled to receive game kits at similar frequencies. For example, all of the purchasers receive game kits every month. In some cases, when purchasers are receiving game kits at similar frequencies, the game kits could be sent to the purchasers at or around the same time of period. For example, game kits could be sent to all of the purchasers during the first week of each month.

In some cases, purchasers are given broad discretion as to the scheduling intervals of their game kits. For example, some purchasers could opt to receive game kits every month, while other purchasers could opt to receive game kits every six months. In some cases, purchasers can also chose when, during an interval, the game kits will be sent. For example, a first purchaser that receives a game kit every month could receive it during the first week of every month, while a second purchaser that receives a game kit every month could receive it during the third week of every month. In some cases, the purchasers are given the option as to change how often they will receive game kits. In some cases, the system **1158** could change the frequency for sending game kits without a purchaser requesting such change.

After the predetermined amount of time has lapsed, the distribution engine **1162** could determine to provide a first game episode to the purchaser. In some cases, all of the first game episodes are the same for each purchaser. In other cases, the first game episodes vary among purchasers. For example, each purchaser could be associated with a particular first game episode based on the purchaser's demographic information (skill level, age, etc.), how frequently the purchaser receives the game kits, etc. The episodes could be sequential, or the episodes could be independent of their ordering. For example, the episodes could evolve and build upon one another. Multiple episodes could flow together to create an overarching story plot, mystery, puzzle, goal, etc.

Upon determining the first game episode for the purchaser, the distribution engine **1162** determines the contents of a first episodic game kit. In doing so, the engine **1162** could process information associated with the purchaser stored in the database **1160.** For example, the engine could use information relating to the purchaser's demographics (skill level, age, etc.), how frequently the purchaser receives the game kits, etc. Also, the engine **1162** could determine whether the purchaser has sent any messages requesting that particular contents be sent. For example, if the purchaser has sent information indicating that the purchaser has lost a game piece (e.g., **14**), then the engine **1162** could include the game piece in the purchaser's episodic game kit. In another example, if a purchaser has played an episode and is ready for the next episode, the purchaser could request that the next episode be provided at that time.

When the distribution engine **1162** has determined the contents of the purchaser's first episodic game kit, the engine **1162** could communicate with the supply computer system **1168** to determine whether all of the contents in the game kit are available. If any of the contents are not available (e.g., content has not yet been created, supply of the content has run out) then the supply computer system **1168** could send a message to the distribution computer system **1158** indicating such unavailability. The distribution computer system **1158** could then wait for the content to become available, or could determine available substitute content to ship to the purchaser. Upon establishing available contents in a first episodic game kit, the distribution computer system **1158** could send a shipment request message to the shipping computer system **1170** for shipping the first episodic game kit to the purchaser. Over time and at predetermined intervals, the distribution computer system determines the contents of additional episodic game kits to send to the purchaser (e.g., a second episodic game kit, a third episodic game kit, etc.).

Upon sending a shipment request message to the shipping computer system **1170** indicating contents of an episodic game kit to be sent to a purchaser, the distribution computer system **1158** could store in the database **1160** information specifying the contents. As such, the distribution engine **1162** could process this stored information later when the distribution engine **1162** is determining the contents of a next episodic game kit to send to the purchaser. For example, if the next game episode involves an accessory for a particular game piece, the distribution engine could determine whether the purchaser has already received the game piece. If information in the database **1160** indicates that the game piece was shipped to the purchaser in a previous game kit, then the next episodic game kit could include the accessory and not the game piece. If information in the database **1160** indicates that the purchaser never received a game kit including the game piece, then the next episodic game kit could include the accessory as well as the game piece. Thus, the distribution computer system **1158** can monitor all purchaser accounts to ensure that each purchaser has all the components needed to play each episode without providing the purchaser with redundant components.

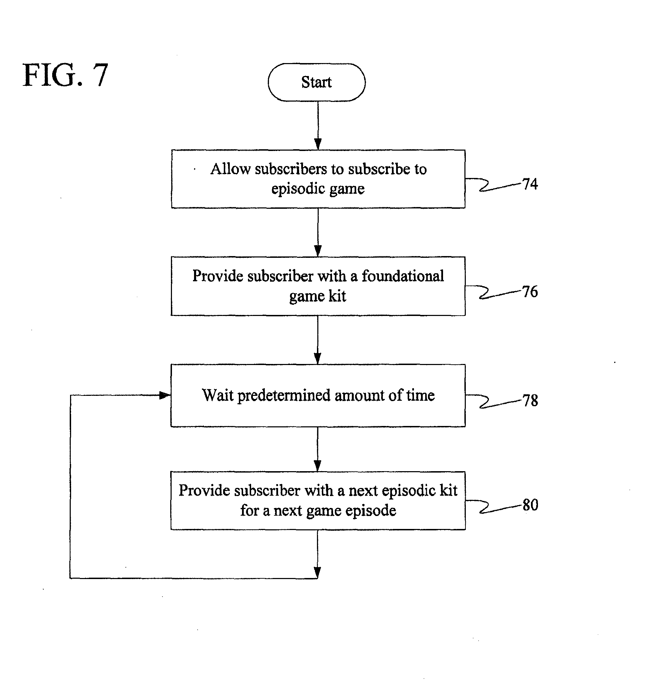

Distribution of the episodic board game could be implemented on a subscription basis. The distribution engine **1162** could include a subscription functionality, for example, as part of its registration functionality. A purchaser could communicate, through a user computer system (e.g., **1166a),** with the distribution engine **1162** to subscribe to an episodic board game membership. **FIG. 7** is a flowchart showing processing steps for distributing an episodic board game to subscribed purchasers. The process could be implemented by a system, for example, an episodic board game distribution system as shown in **FIG. 6****.** Additionally or alternatively, the process could be implemented by an entity including, but not limited to, an individual, retail and/or online store, wholesale distributor, etc. In step **74,** a subscriber subscribes to an episodic board game. An episodic board game distribution computer system **1158** can receive registration information for subscribing users via user computer systems **1166a-166c.** The registration information can include a subscriber's demographic information (e.g., level of skill, age), interests, shipping information, payment information, etc. In some cases, the registration information includes a subscriber's preference as to how often and/or when the user would like to receive episodic game kits. Step **76** comprises providing the subscriber with a foundational game kit. The foundational game kit could include components shown in **FIG. 1****.** For example, a foundational game kit could include a game playing surface **10,** one or more move selectors **20,** any number of game pieces **14, 16,** and a medium containing a foundational set of rules **18.** Step **78** comprises waiting a predetermined amount of time. The predetermined amount of time could be any period of time, for example, a week, several weeks, a month, several months, a year, several years, etc. Once the predetermined amount of time has lapsed, the process moves to step **80,** wherein the subscriber is provided with an episodic game kit for a next game episode. Upon providing the subscriber with the next game episode, the process returns to step **78.** It should be pointed out that the predetermined time could vary from subscriber to subscriber, and it could be variable based on the preferences of the subscriber or the seller, or to allow subsequent purchasers to catch up. It should be well understood that a subscriber could be an end-user and/or a subscribed purchaser that could re-sell any portion of an episodic game kit. Also, it should be well understood that a subscriber could be any type of subscribed purchaser including, but not limited to, a subscribed individual, retail and/or online store, wholesale distributor, etc.

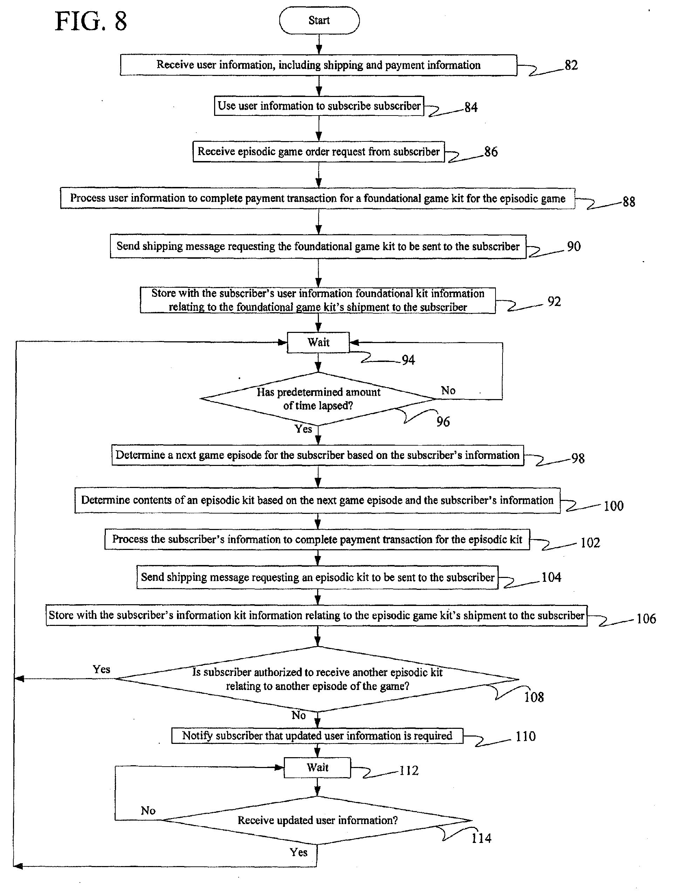

**FIG. 8** is a flowchart showing further processing steps for distributing an episodic board game to a subscribed purchaser. As explained above with reference to **FIG. 6****,** the process shown in **FIG. 8** could be carried out by an episodic board game distribution system **1158.** In such cases, in step **82,** the distribution system **1158** receives user information, including shipping and payment information. The distribution system **1158** could receive the user information from user computer systems **1166a-1166c** via network **1164.** In step **84,** the distribution system **1158** uses the user information to register the user. In step **86,** the distribution system **1158** receives an order request for an episodic board game from the subscriber (e.g., from the user computer system). In step **88,** the distribution system **1158** processes the user information to complete a payment transaction for a foundational game kit for the episodic board game. In step **90,** the distribution system **1158** sends a shipping request message to a shipping computer system **170** requesting that the foundational game kit be sent to the subscriber. In step **92,** the distribution system **1158** stores information relating to the foundational game kit's shipment to the subscriber along with the subscriber's user information. In step **94,** the distribution system **1158** waits, and in step **96** the distribution system **1158** determines whether a predetermined amount of time has lapsed.

Upon determining that the predetermined amount of time has lapsed, the distribution system **1158,** in step **98,** determines a next game episode for the subscriber based on the subscriber's user information in the database **1160.** For example, if the subscriber has received only the foundational game kit for playing the foundational game, then the system could determine the subscriber is to receive a particular episodic kit for playing a first episode of the game. Upon the system selecting the next game episode for the subscriber, the system in step **100** determines contents of a next episodic game kit based on the next game episode.

In step **102,** the system processes the subscriber's information to complete a payment transaction for the next episodic game kit. In step **104,** the system sends a shipping message requesting the next episodic game kit to be sent to the subscriber. In step **106,** the system stores information relating to the next episodic game kit's shipment to the subscriber, along with the subscriber's information in the database. In step **108,** the system determines whether the subscriber is authorized to receive another episodic game kit. In the system determines that the subscriber is not authorized to receive the another episodic game kit (e.g., the subscriber's subscription expired, the subscriber's credit card information is no longer valid), then in step **110** the system notifies the subscriber (e.g., by sending an electronic message) and requests that the subscriber update his or her user information. The system then waits until it determines that it has received updated user information authorizing the subscriber to receive another episodic game kit. Upon the system determining (in step **108** or step **114**) that the subscriber is authorized to receive another episodic game kit, the system loops back to steps **94** and **96** and waits a predetermined amount of time before determining another next game episode for the subscriber.

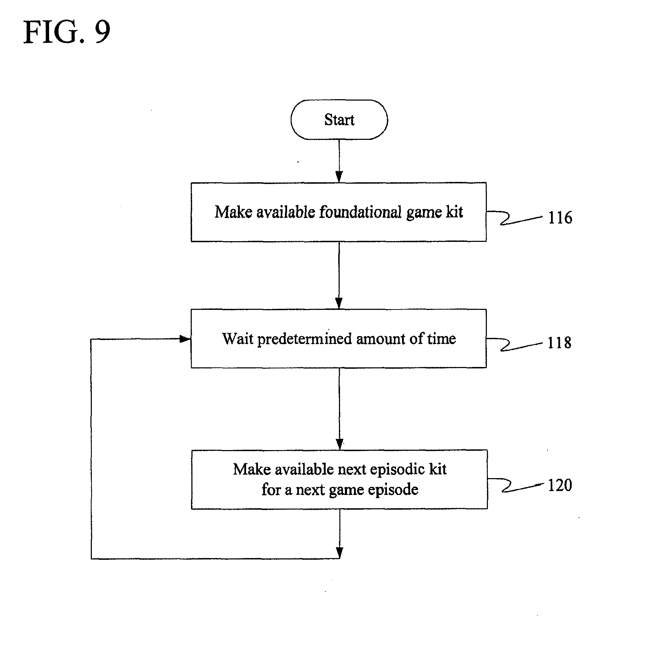

**FIG. 9** is a flowchart showing processing steps for making available an episodic board game to purchasers who need not be subscribers. For example, the processing can be implemented to sell and/or distribute episodic game sets to purchasers upon receiving orders from purchasers for individual episodes. In such cases, it can be desirable to wait a predetermined amount of time between making available each game set so to add suspense and, in turn, entertainment value to the players, and thereby increase consumer demand. The process could be implemented by a system and/or any entity including, but not limited to, an individual, retail and/or online store, wholesale distributor, etc. Thus, in step **116,** a foundational game kit is made available. Step **118** comprises waiting a predetermined amount of time. Step **120** comprises making available a next episodic game kit for a next game episode. The process then returns to step **118** for waiting a predetermined amount of time before making available another episodic game kit. It should be well understood that a subscriber could be an end-user and/or a purchaser that could re-sell any portion of an episodic game kit. Also, it should be well understood that a purchaser could be any type of entity including, but not limited to, an individual, retail and/or online store, wholesale distributor, etc.

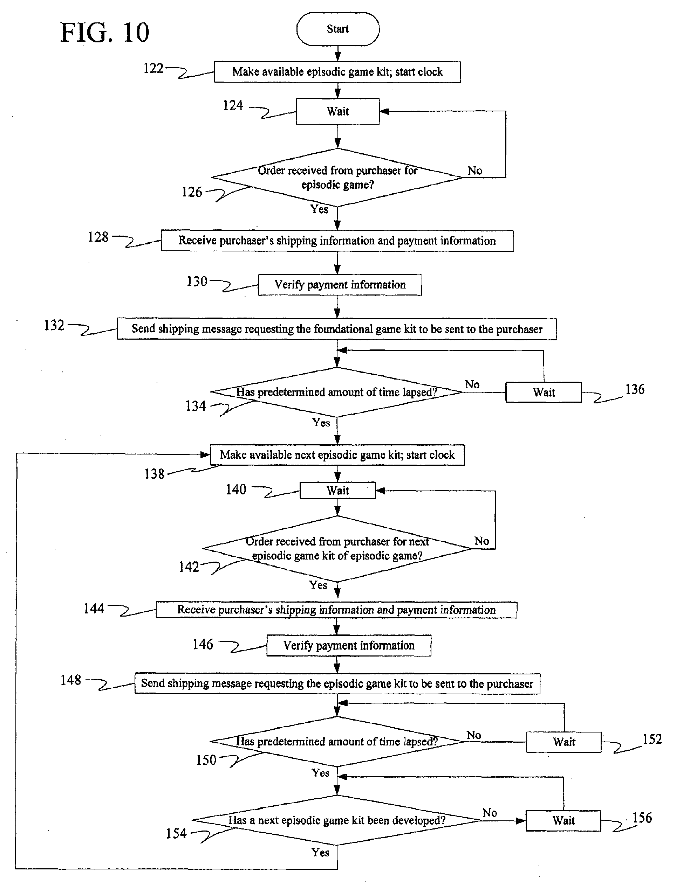

**FIG. 10** is a flow-chart showing further processing steps for making available and distributing an episodic board game to purchasers (e.g., non-subscribed purchasers). The process could be implemented by a system and/or any entity including, but not limited to, an individual, retail and/or online store, wholesale distributor, etc. In step **122,** the system and/or entity makes available a foundational game kit for an episodic board game. In step **122,** the system and/or entity also starts a clock. In step **124,** the system and/or entity waits, and in step **126,** the system and/or entity determines whether it has received an order from a purchasers for the foundational game it. If the determination is negative, then the system and/or entity continues to wait. Upon determining that an order has been received for the foundational game kit, then in step **128** the system and/or entity receives the purchaser's shipping information and payment information. In step **130,** the system and/or entity verifies the purchaser's payment information to complete a transaction for the foundational game kit, and in step **132,** the system and/or entity sends a message (e.g., to a shipment computer system) requesting shipment of the foundational game kit according to the received shipping information. In step **134,** the system and/or entity determines whether a predetermined amount of time has lapsed since the starting of the clock in step **122.** If the determination is negative, then the system and/or entity continues to wait in step **136.** Upon the system determining the predetermined amount of time has lapsed since the starting of the clock, then, in step **138,** the system and/or entity makes available a next episodic game kit and restarts the clock. In step **140,** the system and/or entity waits and in step **142** the system and/or entity determines whether an order has been received from a purchaser for a next episodic game kit. If the determination is negative, then the system and/or entity continues to wait. Upon determining that an order has been received from a customer for the next episodic game kit, the system and/or entity moves to step **144** and receives the purchaser's shipping information and payment information. In step **146,** the system and/or entity verifies the purchaser's payment information. In step **148,** the system and/or entity sends a message (e.g., to a shipment computer system) requesting shipment of the foundational game kit according to the received shipping information. The system and/or entity then proceeds to step **150** and determines whether a predetermined amount of time has lapsed since the starting of the clock in step **138.** If the determination is negative, then the system and/or entity waits in step **152.** If the system and/or entity determines the predetermined amount of time has lapsed, then the system and/or entity moves to step **154** and determines whether a next episodic game kit has been developed. If the determination is negative, then the system and/or entity waits in step **156.** If the system determines the next episodic game kit has been developed (e.g., by receiving information from a supply computer system) then the system and/or entity moves to step **138** and makes available the next episodic game kit.

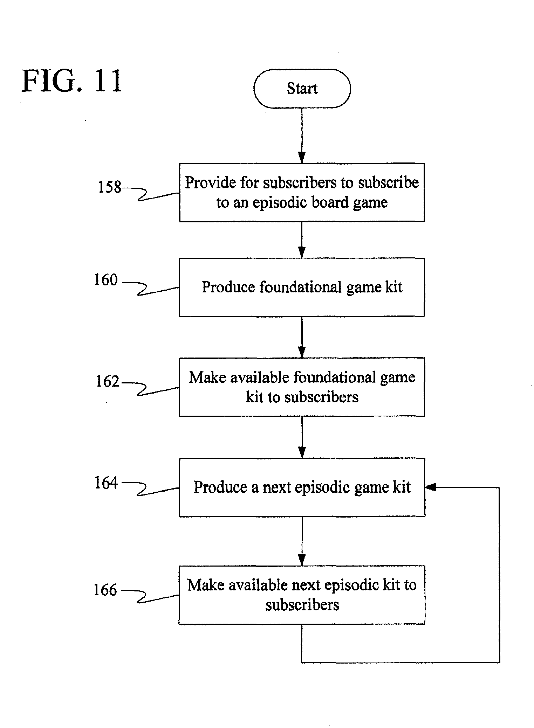

**FIG. 11** is a flowchart showing steps for producing an episodic board game to subscribers. The steps shown in **FIG. 11** could be performed by any system and/or entity including, but not limited to, one or more of a game designer, game creator, game producer, game manufacturer, etc. In step **158,** the system and/or entity provides subscribers to subscribe to an episodic board game. In step **160,** the system and/or entity produces a foundational game kit, for example, by at least one of designing, creating, manufacturing, assembling, or compiling a foundational game kit. Step **162** comprises making available the foundational game kit to subscribers. In step **164,** the system and/or entity produces a next episodic game kit, and in step **166,** makes available the next episodic game kit to subscribers.

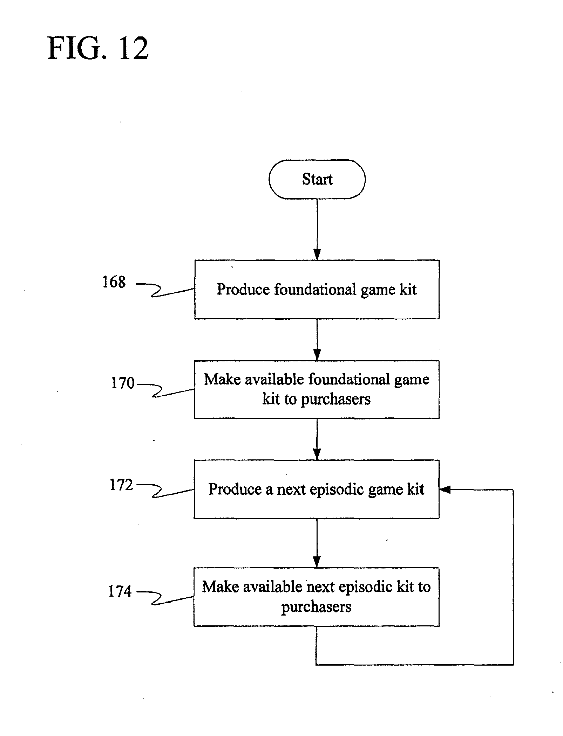

**FIG. 12** is a flowchart showing steps for producing and making available an episodic board game to non-subscribed purchasers. The steps shown in **FIG. 12** could be performed by any system and/or entity including, but not limited to, one or more of a game designer, game creator, game producer, game manufacturer, etc. In step **168,** the system and/or entity produces a foundational game kit, for example, by at least one of designing, creating, manufacturing, assembling, or compiling a foundational game kit. Step **170** comprises making available the foundational game kit to purchasers. In step **172,** the system and/or entity produces a next episodic game kit, and in step **174,** makes available the next episodic game kit to purchasers.

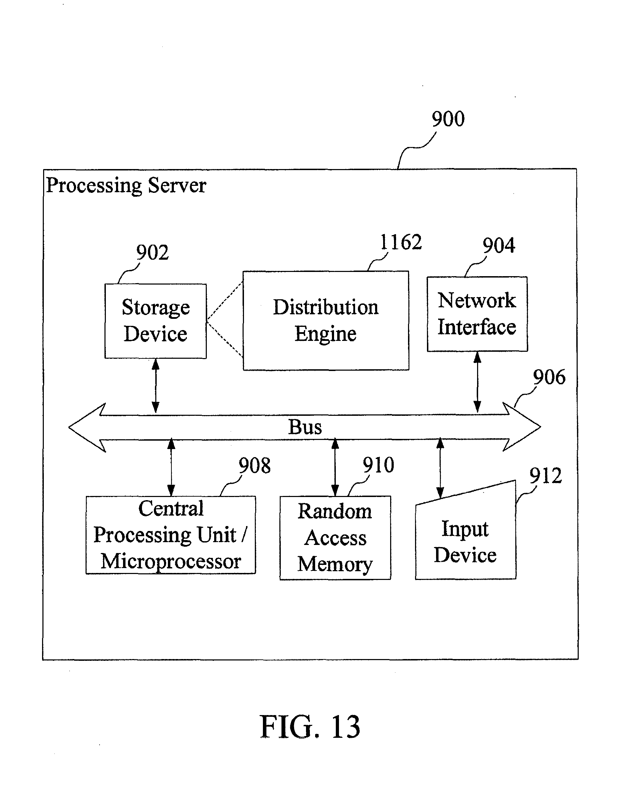

**FIG. 13** **is** a diagram showing hardware and software components of an episodic game board distribution computer system **1158** on which the processing steps of the present disclosure could be implemented. The distribution computer system **1158** comprises a processing server **900** which could include a storage device **902,** a network interface **904,** a communications bus **606,** a central processing unit (CPU) (microprocessor) **908,** a random access memory (RAM) **910,** and one or more input devices **912,** such as a keyboard, mouse, etc. The server **900** could also include a display (e.g., liquid crystal display (LCD), cathode ray tube (CRT), etc.). The storage device **902** could comprise any suitable, computer-readable storage medium such as disk, non-volatile memory (e.g., read-only memory (ROM), eraseable programmable ROM (EPROM), electrically-eraseable programmable ROM (EEPROM), flash memory, field-programmable gate array (FPGA), etc.). The server **900** could be a networked computer system, a personal computer, a smart phone, tablet computer etc. It is noted that the server **900** need not be a networked server, and indeed, could be a stand-alone computer system.

The functionality provided by the present disclosure could be provided by a distribution engine **1162** which could be embodied as computer-readable program code stored on the storage device **902** and executed by the CPU 1012 using any suitable, high or low level computing language, such as Python, Java, C, C++, C#, .NET, MATLAB, etc. The network interface **904** could include an Ethernet network interface device, a wireless network interface device, or any other suitable device which permits the server **900** to communicate via the network. The CPU **908** could include any suitable single- or multiple-core microprocessor of any suitable architecture that is capable of implementing and running the simulation (e.g., Intel processor). The random access memory **910** could include any suitable, high-speed, random access memory typical of most modern computers, such as dynamic RAM (DRAM), etc.

Having thus described the system and method in detail, it is to be understood that the foregoing description is not intended to limit the spirit or scope thereof. It will be understood that the embodiments of the present disclosure described herein are merely exemplary and that a person skilled in the art may make any variations and modification without departing from the spirit and scope of the disclosure. All such variations and modifications, including those discussed above, are intended to be included within the scope of the disclosure.

## Claims

1. An episodic board game, comprising:
a first game kit including a first set of rules and a first set of game components; and
a plurality of subsequent game kits released incrementally at predetermined time intervals for integration with at least the first game kit or a previously integrated subsequent game kit, each of the plurality of subsequent game kits including at least subsequent set of rules or subsequent set of game components.

2. The episodic board game of Claim 1, wherein the first set of game components includes a game playing surface, game pieces for interacting with a design on the game playing surface, and one or more move selectors for influencing movement of game pieces relative to the design of the game playing surface.

3. The episodic board game of Claim 1, wherein subsequent set of game components are integrated with one or more of the previously provided sets of game components.

4. The episodic board game of Claim 1, wherein subsequent sets of rules supersedes one or more of the previously provided sets of rules.

5. The episodic board game of Claim 1, wherein subsequent sets of rules modifies one or more of the previously provided sets of rules.

6. The episodic board game of Claim 1, wherein subsequent sets of rules supplements one or more of the previously provided sets of rules.

7. The episodic board game of Claim 1, wherein each of the episodic game kits represents a respective episode of an overarching plot.

8. A method of playing an episodic board game, comprising:
providing a first game kit to play a game, the first game kit including a first set of rules and a first set of game components;
providing a subsequent game kit to play a subsequent episode of an episodic board game released at a predetermined time interval for integration with the first game kit, the subsequent game kit including at least a subsequent set of rules or a subsequent set of game components; and
providing a second subsequent game kit to play a second subsequent episode of an episodic board game released at the predetermined time interval for integration with at least one or both of the first game kit or the subsequent game kit, the second subsequent game kit including at least a second subsequent set of rules or a second subsequent set of game components.

9. The method of Claim 8, wherein the first set of game components includes a game playing surface, game pieces for interacting with a design on the game playing surface, and one or more move selectors for influencing movement of game pieces relative to the design of the game playing surface.

10. The method of Claim 8, further comprising integrating each subsequent set of game components with one or more of the previously provided sets of game components.

11. The method of Claim 8, further comprising superseding one or more of the previously provided sets of rules with the subsequent set of rules.

12. The method of Claim 8, further comprising modifying one or more of the previously provided sets of rules with the subsequent sets of rules.

13. The method of Claim 8, further comprising supplementing one or more of the previously provided sets of rules with the subsequent sets of rules.

14. The method of Claim 8, wherein each episode is part of an overarching plot.

15. A method for distributing an episodic board game, comprising:
electronically receiving, at a distribution computer system, an order request for an episodic board game from a user computer system of a purchaser, the distribution computer system in electrical communication with the user computer system over a network;
electronically storing in a database, by the distribution computer system, user information and preferred frequency for receiving game kits;
electronically transmitting, by the distribution computer system, a shipping request to a shipping computer system for a first game kit to be shipped to the purchaser;
electronically determining, by the distribution computer system, whether to provide a subsequent game kit to the purchaser based on whether a predetermined amount of time has passed;
electronically determining, by the distribution computer system, contents of an subsequent game kit based on the user information of the purchaser; and
electronically transmitting, by the distribution computer system, a shipping request to the shipping computer system for the subsequent game kit to be shipped to the purchaser.

16. The method of Claim 15, wherein the frequency of receiving game kits is selected by the purchaser.

17. The method of Claim 15, wherein the user information includes a time frame during an interval the purchaser wants the subsequent game kits to be sent.

18. The method of Claim 15, wherein the distribution computer system determines the contents of the subsequent game kit based on demographic information.

19. The method of Claim 15, wherein the distribution computer system determines the contents of the subsequent game kit based on the frequency of receiving game kits.

20. The method of Claim 15, further comprising electronically receiving from a purchaser a subscription for a subsequent board game membership.
